# EUROPÄISCHE PATENTSCHRIFT

(11) **EP 0 656 394 B1**
(45) Veröffentlichungstag und Bekanntmachung des Hinweises auf die Patenterteilung: **10.07.1996**
(21) Anmeldenummer: 94116228.1
(22) Anmeldetag: 23.11.1991
(51) Int. Cl.: C08L 33/06, C08L 31/02, C09D 133/06, C09D 131/02, C09J 133/06, C09J 131/02

(54) **Mit Luftfeuchtigkeit selbsthärtbare Copolymerisate und Mischungen**
By air humidity self curable copolymers and mixtures
Copolymères autoréticulables par l'humidité de l'air et mélanges

(30) Priorität: 06.12.1990 DE 4038939
(43) Veröffentlichungstag der Anmeldung: 07.06.1995
(62) Teilanmeldung aus: 91119998.2
(73) Patentinhaber: BASF Aktiengesellschaft, D-67063 Ludwigshafen (DE)
(72) Erfinder: Filges, Ulrich, Dr., D-67433 Neustadt (DE); Aydin, Oral, Dr., D-68165 Mannheim (DE); Auchter, Gerhard, Dr., D-67098 Bad Dürkheim (DE); Barwich, Jürgen, Dr., D-67434 Neustadt (DE); Anders, Hermann, Dr., D-67149 Meckenheim (DE); Langer, Werner, Dr., D-67061 Ludwigshafen (DE); Vorspohl, Klaus, Dr., D-67069 Ludwighafen (DE)

(56) Entgegenhaltungen:
- EP-A- 0 075 206
- EP-A- 0 337 976
- WO-A-90/00570
- DE-A- 2 643 642
- US-A- 4 376 187
- CHEMICAL ABSTRACTS, vol. 91, no. 8, 20.August 1979 Columbus, Ohio, US; abstract no. 58862, OTA, TOSHIYUKI 'Manufacture of polyurethanes' Seite 101;

## Beschreibung

Die vorliegende Erfindung betrifft neue mit Luftfeuchtigkeit selbsthärtbare Mischungen von Copolymerisaten auf der Basis von Acrylsäure-, Methacrylsäure- und/oder Vinylestern mit Vernetzungskomponenten folgenden Aufbaus bzw. folgender Zusammensetzung:
C) härtbare Mischungen aus
   1) 9 bis 70 Gew.-% eines Copolymerisates C1 (= 100 Gew.-%) aus
      a) 50 bis 99,9 Gew.-% eines oder mehrerer C₁-C₂₄-Alkylester der Acryl- oder Methacrylsäure und/oder C₁-C₂₀-Vinylester (Verbindungen I),
      b) 0,1 bis 20 Gew.-% eines radikalisch copolymerisierbaren Carbonsäureanhydrids (Verbindungen III) und
      c) 0 bis 30 Gew.-% weiterer Monomerer (Verbindungen IV)
      und
   2) 29 bis 90 Gew.-% eines Copolymerisats C2 (= 100 Gew.-%) aus
      a) 60 bis 99,5 Gew.-% der Verbindungen I,
      b) 0,5 bis 10 Gew.-% eines Comonomeren mit einer oder mehreren Hydroxylgruppen (Verbindungen VII) und
      c) 0 bis 30 Gew.-% der Verbindungen IV,
      und
   3) 1 bis 30 Gew.-% eines zwei- oder mehrwertigen Isocyanats (Verbindungen VI), mit der Maßgabe, daß einer Hydroxylgruppe der Verbindungen VII 1,7 bis 2,3 Isocyanatgruppen der Verbindungen VI entsprechen.

Außerdem betrifft die Erfindung die Verwendung dieser härtbaren Mischungen C als mit Luftfeuchtigkeit selbsthärtbare Kleb-, Dichtungs- und Beschichtungsmassen sowie mit Luftfeutigkeit selbsthärtbare Kleb-, Dichtungs- und Beschichtungsmassen, die die härtbaren Mischungen C enthalten.

Aus der älteren deutschen Anmeldung P 3913168 sind Copolymerisate auf der Basis von Alkylacrylaten und/oder -methacrylaten mit freien Isocyanatgruppen bekannt, die als Klebe-, Dichtungs- und Beschichtungsmassen empfohlen werden.

Diese Copolymerisate vermögen jedoch nicht ganz zu befriedigen, da ihr an sich gutes Fließverhalten noch weiter verbesserungsbedürftig ist.

Eine Verbesserung des Fließverhaltens durch Verwendung üblicher Mercaptan-Regler ist zwar beschrieben, ihr Einsatz bedingt jedoch gleichzeitig eine unzureichende Vernetzung bei Feuchtigkeitseinwirkung, insbesondere dann, wenn zur Erniedrigung des Molekulargewichtes hohe Regler-Konzentrationen benötigt werden.

Copolymerisate mit freien Isocyanatgruppen und zusätzlichen freien Anhydridgruppen sind in der DE-A-38 04 589 beschrieben.

Diese Copolymerisate eignen sich jedoch nur als Bindemittelkomponenten in Zweikomponenten-Beschichtungs- und Dichtungsmassen, welche als weitere Komponenten organische Polyhydroxylverbindungen enthalten.

Aus der DE-A 3 601 272 sind Klebstoffe aus mindestens zweiwertigen Isocyanaten und anhydridhaltigen Copolymerisaten, die aktiven Wasserstoff enthalten, bekannt. Diese Klebstoffe werden naturgemäß nur als Zweikomponentenkleber empfohlen, da beim Vermischen der Komponenten zum Ein-komponentenkleber die aktivierten Copolymerisate umgehend mit den Isocyanaten reagieren würden. Diese Reaktion bedingt zudem eine unzureichende Topfzeit durch rasches Gelieren bei der Anwendung des Klebstoffes. Darüber hinaus führt diese Reaktion aufgrund von frühzeitiger Decarboxylierung zur Blasenbildung und zu hoher Oberflächenklebrigkeit der Klebstoffe im ausgehärteten Zustand.

Isocyanathaltige Copolymerisate aus hydroxylhaltigen Acrylaten und zwei- oder mehrwertigen Isocyanaten sind in der DE-A 29 15 864 als härtbare Einkomponenten-Dichtungsmittel beschrieben. Nachteilig ist sowohl die durch die hohe Vernetzungsdichte der ausgehärteten Dichtungsmaterialien bedingte abnehmende Elastizität nach längerer Lagerung als auch die durch Decarboxylierung hervorgerufene Blasenbildung.

Aus der DE-A 37 10 963 sind anhydridhaltige Copolymerisate mit zwei- oder mehrwertigen Aldiminen und/oder Ketiminen bekannt, die als feuchtigkeitshärtbare Bindemittelkombinationen empfohlen werden. Diese Bindemittel zeigen jedoch ein schlechtes Fließverhalten und neigen im ausgehärteten Zustand zur Oberflächenklebrigkeit.

Der vorliegenden Erfindung lag daher die Aufgabe zugrunde, neue Copolymerisate und Mischungen aus derartigen Copolymerisaten mit Vernetzungskomponenten bereitzustellen, die verbesserte anwendungstechnische Eigenschaften aufweisen und insbesondere als mit Luftfeuchtigkeit selbsthärtbare Kleb-, Dichtungs- und Beschichtungsmassen verwendet werden können.

Demgemäß wurden die eingangs definierten Mischungen C sowie ihre Verwendung als mit Luftfeuchtigkeit selbsthärtbare Kleb-, Dichtungs- und Beschichtungsmassen gefunden.

Weiterhin wurden mit Luftfeuchtigkeit selbsthartbare Kleb-, Dichtungs- und Beschichtungsmassen gefunden, die die härtbaren Mischungen C enthalten.

Als Verbindungen I eignen sich C₁-C₂₄-Alkylester der Acryl- und/oder Methacrylsäure und/oder C₁-C₂₀-Vinylester. Besonders bevorzugte Verbindungen I sind die C₁-C₄-Alkylester der Acryl- und/oder Methacrylsäure, also z.B. Methyl-, Ethyl-, n-Propyl- und n-Butylacrylat und -methacrylat. Bevorzugt sind iso-Propyl-, iso-Butyl-, sec.-Butyl-, tert.-Butyl-, n-Pentyl-, n-Hexyl-, 2-Ethylhexyl-, Cyclohexyl-, n-Heptyl-, n-Octyl-, Phenylethyl- und Phenylpropylacrylat und -methacrylat. Weiterhin sind sauerstoffhaltige Alkylester der Acryl- und/oder Methacrylsäure wie 2-Ethoxyethyl-, 2-Butoxyethyl- und Furfurylacrylat und -methacrylat zu nennen. Daneben eignen sich Vinylester wie Vinylformiat, -acetat, -propionat, -butyrat, -laurat und -stearat.

Als Verbindung III kommen radikalisch polymerisierbare Carbonsäureanhydride in Betracht, bevorzugt Itaconsäureanhydrid, Citraconsäureanhydrid, Cyclohexendicarbonsäureanhydrid und besonders bevorzugt Maleinsäureanhydrid.

Zusätzliche weitere Monomere als Verbindungen IV sind vor allem Vinylaromaten wie α-Methylstyrol, β-Methylstyrol, Vinyltoluole und tert.-Butylstyrole, Halogenstyrole wie Chlorstyrole, Vinylether von C₁-C₈-Alkanolen wie Ethylvinylether, Vinylester von C₂-C₁₂-Alkansäuren wie Vinylacetat und Vinylpropionat, Vinylhalogenide wie Vinylchlorid, niedere ungesättigte Kohlenwasserstoffe wie α-Olefine oder konjugierte Kohlenwasserstoffe wie Butadien und Isopren.

Besonders bevorzugte Verbindungen IV sind Styrol und ungesättigte Nitrile wie vornehmlich Acryl- und Methacrylnitril.

Als Verbindungen VI eignen sich zwei- oder mehrwertige Isocyanate, bevorzugt solche mit Isocyanatgehalten von 1 bis 60 Gew.-% NCO, besonders bevorzugt 5 bis 40 Gew.-% NCO.

Besonders bevorzugte Verbindungen VI sind Triisocyanate wie Tris-[4-isocyanat-phenyl]-methan und vor allem solche aus der Triisocyanuratreihe wie 2,4,6-Trioxo-1,3,5-tris-[3-isocyanat-4-methyl-phenyl]-hexahydro-1,3,5-triazin, 2,4,6-Trioxo-1,3,5-tris-[6-isocyanat-1-hexyl]-hexahydro-1,3,5-triazin und 2,4,6-Trioxo-1,3,5-tris-[5-isocyanat-1,3,3-trimethyl-cyclohexyl-methyl]-hexahydro-1,3,5-triazin. Daneben eignen sich 2-Ethyl-1,2,3-tris-[3-isocyanat-4-methyl-anilinocarbonyl-oxy]-propan und 2,4-Bis-[4-isocyanat-benzyl]-1-isocyanat-benzol.

Bevorzugte Verbindungen VI sind Diisocyanate wie vor allem 1,6-Bis-[isocyanat]-hexan, 2,4-Bis-[isocyanat]-toluol, 2,6-Bis-[isocyanat]-toluol, Bis-[4-isocyanatphenyl]-methan und ganz besonders 5-Isocyanat-3-(isocyanatmethyl)-1,1,3-trimethylcyclohexan (Isophorondiisocyanat). Daneben eignen sich 1,4-Bis-[2-isocyanatethyl]-cyclohexan und 1,3-Bis-[isocyanatmethyl]-cyclöhexan.

Als Verbindungen VI kommen weiterhin Di- oder Triisocyanate von Allophanaten, Carbodiimiden, Uretdionen und vor allem Biureten wie Bis-[6-isocyanat-hexylaminocarbonyl]-(6-isocyanat-hexyl)-amin in Betracht.

Außerdem eignen sich als Verbindungen VI Polyurethan-Prepolymere aus Polyisocyanaten und Polyolen. Bevorzugt sind Polyurethan-Prepolymere mit Isocyanatgehalten von 1 bis 30 Gew.-% NCO, vorzugsweise 5 bis 20 Gew.-% NCO.

Bevorzugte Polyisocyanate sind Di- und Triisocyanate. Bevorzugte Polyole sind solche mit Funktionalitäten von 2 bis 3, vorzugsweise 2 und Molekulargewichten von 1000 bis 8000, vorzugsweise 1800 bis 6000. Bevorzugt sind Polythioetherpolyole, Polyesteramide, hydroxylgruppenhaltige Polyacetale und hydroxylgruppenhaltige aliphatische Polycarbonate. Besonders bevorzugt sind Polyesterpolyole und vor allem Polyetherpolyole, darunter insbesondere solche mit einer Funktionalität von 2 und Molekulargewichten von 1800 bis 4000.

Die Polyetherpolyole werden im allgemeinen durch anionische Polymerisation mit Alkalihydroxiden oder Alkalialkoholaten oder durch kationische Polymerisation mit Lewis-Säuren als Katalysatoren aus Alkylenoxiden und gegebenenfalls Startern hergestellt.

Bevorzugte Alkylenoxide sind Tetrahydrofuran, 1,3-Propylenoxid, 1,2- und 2,3-Butylenoxid, Styroloxid und Epichlorhydrin. Besonders bevorzugt sind Ethylenoxid und 1,2-Propylenoxid.

Als Starter eignen sich Wasser, organische Dicarbonsäuren wie Bernsteinsäure, Adipinsäure, Phthalsäure und Terephthalsäure, Alkanolamine wie Ethanolamin, Diethanolamin und Triethanolamin sowie Ammoniak. Bevorzugte Starter sind zwei- und dreiwertige Alkohole wie Ethandiol, 1,2- und 1,3-Propandiol, Diethylenglykol, Dipropylenglykol, Butandiol-1,4, Hexandiol-1,6, Trimethylolpropan und besonders bevorzugt Glycerin.

Die härtbaren Mischungen C gemäß der Erfindung werden aus 9 bis 70 Gew.-%, vorzugsweise 9 bis 60 Gew.-% eines Copolymerisates C1, 29 bis 90 Gew.-%, vorzugsweise 39 bis 90 Gew.-% eines Copolymerisates C2 und 1 bis 30 Gew.-% der Verbindungen VI hergestellt, mit der Maßgabe, daß einer Hydroxylgruppe der Verbindungen VII 1,7 bis 2,3, bevorzuugt 1,9 bis 2,1 Isocyanatgruppen der Verbindungen VI entsprechen.

Die Copolymerisate-C1 bestehen ihrerseits aus 50 bis 99,9 Gew.-%, vorzugsweise 62 bis 98 Gew.-% der Verbindungen I und 0,1 bis 20 Gew.-%, vorzugsweise 2 bis 8 Gew.-% der Verbindungen III. Außerdem können bis zu 30 Gew.-% der Verbindungen IV mitverwendet werden.

Die Copolymerisate C2 bestehen ihrerseits aus 60 bis 99,5 Gew.-%, vorzugsweise 64 bis 99 Gew.-% der Verbindungen I und 0,5 bis 10 Gew.-%, vorzugsweise 1 bis 6 Gew.-% eines Comonomeren mit einer oder mehreren Hydroxylgruppen als Verbindungen VII. Außerdem können bis zu 30 Gew.-% der Verbindungen IV mitverwendet werden.

Als Verbindungen VI sind in den härtbaren Mischungen C die Diisocyanate besonders bevorzugt, darunter vor allem Isophosphorondiisocyanat.

Als Verbindungen VII eignen sich Comonomere mit einer oder mehreren Hydroxylgruppen. Bevorzugt sind Hydroxyalkylacrylate und -methacrylate, darunter vor allem die Hydroxy-C₂-C₆-alkylester der Acryl- und Methacrylsäure wie Hydroxyethyl-, Hydroxypropyl-, Hydroxybutyl-, Hydroxypentyl- und Hydroxyhexylacrylat und -methacrylat.

Daneben eignen sich Polyethylenglykolmono- und Polypropylenglykolmonoacrylate und -methacrylate mit bis zu 6 Ethoxy- bzw. Propoxyeinheiten.

Die Copolymerisate C1 und C2 werden durch radikalische Polymerisation wie Masse- oder Lösungspolymerisation hergestellt, wobei die Polymerisation in Lösung bevorzugt ist.

Als Lösungsmittel werden in der Regel Ether wie Tetrahydrofuran und Dioxan, Ester wie Essigsäureethylester und -propylester sowie n-Butylacetat, Glykoletheracetate wie Methyl-, Ethyl- und Butylglycolacetat, Ketone wie Aceton und Cyclohexanon, Dialkylcarbonsäureamide wie Dimethylformamid, Dimethylacetamid und N-Methylpyrrolidon, Aromaten wie Toluol und die Xylole, aliphatische Kohlenwasserstoffe wie Isooctan und chlorierte Kohlenwasserstoffe wie tert.-Butylchlorid verwendet.

Es ist ebenso möglich, als Lösungsmittel einen Weichmacher als Polymerisationsmedium zu verwenden.

Als Initiatoren für die radikalisch ablaufende Polymerisationsreaktion können die üblichen Peroxo- oder Azoverbindungen, auch in Kombination mit Reduktionsmitteln, zweckmäßigerweise in Mengen von 0,05 bis 10 Gew.-%, bezogen auf das Gewicht der Monomeren, eingesetzt werden.

Als bevorzugte Initiatoren sind Dibenzoylperoxid, tert.-Butylperpivalat, tert.-Butylper-2-ethylhexanoat, Di-tert.-butylperoxid, tert.-Butylhydroperoxid, Cumolhydroperoxid, Dilaurylperoxid, tert.-Butylperoximaleinat, tert.-Butylperoxibenzoat, Dicumylperoxid, Didecanoylperoxid, Methylethylketonperoxid, 2,2'-Azobis-(2,4-dimethylvaleronitril), 2,2'-Azobis-(2,3-dimethylbutyronitril) und 2,2'-Azobisisobutyronitril zu nennen. Daneben eignen sich silangruppentragende Azoinitiatoren (EP-A 159 710). Besonders bevorzugte Initiatoren für die Polymerisation der Copolymerisate C2 und E1 sind hydroxylhaltige Initiatoren wie Azo-bis-cyanopentanol und 2,2'-Azobis[2-methyl-N-(2-hydroxyethyl)-propionamid].

Bevorzugte Reduktionsmittel sind Hydrazin, Natriumsulfit, Natriumhydrogensulfit, Kaliumsulfit, Kaliumhydrogensulfit, Ammoniumsulfit und Ammoniumhydrogensulfit, die in Mengen von 0,005 bis 2 Gew.-% eingesetzt werden.

Zur Steuerung der Molekularmasse können in den Copolymerisaten, die keinen Si-Regler Va bzw. Vb enthalten, übliche Regler zugesetzt werden. Bevorzugte Regler sind Tetrachlorkohlenstoff, Tetrabromkohlenstoff, Benzylbromid, Trichlorbrommethan, Butylmercaptan, n-Dodecylmercaptan, tert.-Dodecylmercaptan, Thiophenol und Thioglykolsäurealkylester wie Thioglykolsäuremethyl- und ethylester.

Besonders bevorzugte Regler für die Copolymerisate C2 sind Thiole, die im Molekül noch eine oder mehrere Hydroxylgruppen enthalten, z.B. Mercaptoethanol, Mercaptopropanol und Thioglycerin.

Diese werden bevorzugt in Mengen von 0,2 bis 6 Gew.-%, besonders bevorzugt von 0,5 bis 2 Gew.-% eingesetzt. Im Falle der Verwendung dieser Regler und/oder hydroxylhaltiger Initiatoren ermäßigt sich die Menge der alkoholischen Verbindungen VII entsprechend.

Im allgemeinen führt man die Polymerisation bei 0 bis 200°C, vorzugsweise bei 60 bis 130°C durch.

Zweckmäßigerweise wird die Umsetzung bei Normaldruck vorgenommen, jedoch kann man auch bei vermindertem oder leicht erhöhtem Druck arbeiten, also etwa im Bereich von 0,5 bis 5 bar.

Die Reaktionszeiten betragen normalerweise 1 bis 30, meistens 3 bis 6 Stunden.

Verfahrenstechnisch geht man bei der Lösungspolymerisation in der Regel so vor, daß man einen Teil des Lösungsmittels, gegebenenfalls mit Trocknungsmittel und/oder einem Teil der Monomeren III auf die Reaktionstemperatur erhitzt und die Monomermischung, den Regler und Initiator sowie die Restmenge des Lösungsmittels kontinuierlich zuführt, bevorzugt gleichzeitig in getrennten Zuläufen.

Bei der Massepolymerisation wird im allgemeinen ein Teil des Polymerisationsansatzes vorgelegt, auf die Polymerisationstemperatur erhitzt, wonach anschließend der Rest kontinuierlich zugeführt wird.

Nach beendetem Zulauf setzt man die Polymerisation, gegebenenfalls unter Zusatz weiterer Initiatormengen, noch etwa für eine Zeit von 2 Stunden fort, um Restmonomerengehalte abzusenken. Man kann die Restmonomeren aber ebenso durch Destillation des Lösungsmittels entfernen.

Um eine vorzeitige Vernetzung der Isocyanatgruppen bereits während der Polymerisation oder während der Lagerung zu vermeiden arbeitet man zweckmäßigerweise in nahezu wasserfreiem Polymerisationsmedium, d.h. bei einem Wassergehalt unter 500 ppm, bevorzugt unter 100 ppm. Hierzu verwendet man im allgemeinen Trocknungsmittel, auch in Kombination mit Lewis-Säuren, die die Hydrolyse der Trocknungsmittel beschleunigen.

Bevorzugte Trocknungsmittel sind Tetraalkoxysilane wie Tetraethoxysilan, Orthoameisensäuretrialkylester wie Triethylorthoformiat und Isocyanate wie Phenylisocyanat.

Für die Copolymerisate C1 werden K-Werte von 10 bis 150, insbesondere von 20 bis 90 bevorzugt, für die Copolymerisate C2 werden K-Werte im Bereich von 8 bis 60, besonders von 10 bis 40 bevorzugt.

Die K-Werte sind relative Viskositätszahlen, die in Analogie zur DIN 53726 bei 25°C bestimmt werden. Die Bestimmung der K-Werte erfolgt in Tetrahydrofuran.

Zur Herstellung der erfindungsgemäßen härtbaren Mischungen C werden zunächst die hydroxylhaltigen Copolymerisate C2 mit den Verbindungen VI umgesetzt, indem die Copolymerisate C2 vorgelegt und die Verbindungen VI zugetropft werden. Die Umsetzung kann ebenso in Lösung durchgeführt werden. Bevorzugte Lösungsmittel sind Toluol, Ethylacetat und Methylethylketon.

Außerdem können übliche Urethanisierungskatalysatoren mitverwendet werden. Bevorzugt sind tertiäre Amine wie 1,4-Diaza-bicyclo[2.2.2]-octan, Bis-[dimethylamino-methyl]-phenol, Triethylamin, Benzyl-dimethylamin, Bis-[2-dimethylamino-ethyl]-ether, Tetramethylguanidin und Lewis-Säuren wie Bis-[ethylhexanoyloxy]-zinn, Bis-[dodecanoyloxy]-dibutyl-zinn und Dichlor-dimethyl-zinn.

Im allgemeinen führt man die Reaktion bei 20 bis 150°C, vorzugsweise bei 80 bis 130°C durch.

Die Reaktionszeiten betragen normalerweise 2 bis 30, meistens 4 bis 10 Stunden.

Es ist auch möglich, die Verbindungen VI zusammen mit Urethanisierungs- katalysatoren bereits während der Herstellung der Copolymerisate C2 mit diesen zur Reaktion zu bringen, wodurch ein Verfahrensschritt eingespart wird.

Das Umsetzungsprodukt aus den Copolymerisaten C2 und den Verbindungen VI wird anschließend bei 0 bis 200°C, vorzugsweise bei 40 bis 120°C mit den Copolymerisaten C1 gemischt.

Um eine verbesserte Homogenisierung der erfindungsgemäßen Mischungen zu erreichen, ist es auch möglich, die Copolymerisate und die Vernetzungskomponenten zunächst im wasserfreien Lösungsmittel zu lösen und das Lösungsmittel dieser Lösungen wieder destillativ zu entfernen.

Die härtbaren Mischungen C gemäß der Erfindung können als mit Luftfeuchtigkeit selbsthärtbare Kleb-, Dichtungs- und Beschichtungsmassen verwendet werden und werden als solche bevorzugt lösungsmittelfrei eingesetzt.

Die mit Luftfeuchtigkeit selbsthärtbaren Kleb-, Dichtungs- und Beschichtungsmassen können noch übliche Zusatzstoffe, im allgemeinen in Mengen bis zu 400 Gew.-%, bezogen auf die härtbaren Mischungen enthalten.

übliche Zusatzstoffe sind beispielsweise Weichmacher, Füllstoffe, Verstärkungsmittel, Härtungsbeschleuniger und Lösungsmittel.

Bevorzugte Weichmacher zur Erniedrigung der Glastemperatur und der Viskosität sind Phthalsäureester wie Diethyl-, Di-n-butyl-, Di-isoheptyl-, Di(2-ethylhexyl)- und Butylbenzylphthalat, Adipinsäureester wie Di-2-ethylhexyl- und Di-iso-octyladipat, Sebacinsäureester wie Di-(2-ethylhexyl)- und Dioctylsebacinat, Polyalkylenglykolester wie Di- und Triethylenglykoldibenzoat, Phosphorsäureester wie Tri-n-butyl-, Tri-isobutyl- und Tri-(β-chlorethyl)phosphat, chlorierte Kohlenwasserstoffe, Alkyldiphenyle und partiell hydrierte Terphenyle.

Die Weichmacher werden üblicherweise in Mengen von 1 bis 20 Gew.-% eingesetzt.

Bevorzugte Füllstoffe und Verstärkungsmittel sind hydrophobiertes Calciumcarbonat, Magnesiumcarbonat, Talk, Titandioxid, Bariumsulfat, Aluminiumoxid, hydrophobiertes Siliciumdioxid, Metallpulver wie Zink- und Eisenpulver, Bentonit, Kaolin und Ruß, die im allgemeinen in Mengen bis zu 300 Gew.-%, vorzugsweise bis zu 100 Gew.-% eingesetzt werden.

Die Füllstoffe werden in der Regel in feiner Körnung zugegeben, wobei die durchschnittliche Korngröße vorzugsweise 0,01 bis 200 µm, insbesondere 0,01 bis 10 µm beträgt.

Bevorzugte Härtungsbeschleuniger für die Umsetzung der freien Isocyanatgruppen sind organische Metallverbindungen wie Bis-[dodecanoyloxy]-di-butyl-zinn, Bis-[dodecanoyloxy]-dioctyl-zinn, Zinnoctylat, Manganoctylat und Monobutylzinnoxid, Aminverbindungen wie N,N-Dimethylcyclohexylamin, Tri-n-butylamin, Triethylendiamin, N,N-Dimethylbenzylamin und 1,8-Diazobicyclo-[5.4.6]-undecen-7 sowie deren Salze, z.B. die Hydrochloride.

Die Härtungsbeschleuniger werden im allgemeinen in Mengen von 0,01 bis 10 Gew.-% verwendet.

Lösungsmittel werden bevorzugt dann zugesetzt, wenn die Copolymerisate durch Massenpolymerisation hergestellt wurden oder das Lösungsmittel nach der Lösungsmittelpolymerisation zusammen mit den Restmonomeren abdestilliert wurde. Bevorzugte Lösungsmittel zur Verbesserung der Verarbeitbarkeit und zur Erniedrigung der Viskosität sind solche, die bereits für die Polymerisation verwendet wurden, beispielsweise aromatische Kohlenwasserstoffe wie Toluol und Xylol und Ketone wie Aceton und Methylethylketon, die üblicherweise in Mengen bis zu 50 Gew.-% eingesetzt werden.

Zur Erniedrigung der Viskosität lösungsmittelfreier Massen können diese auf bis zu 150°C, bevorzugt auf bis zu 100°C erwärmt und im erwärmten Zustand angewendet werden, wodurch eine hohe Anfangshaftung erreicht wird.

Die erfindungsgemäßen Massen können in Form von Einkomponentensystemen hergestellt werden, indem man alle Bestandteile miteinander vermischt und in einem abgedichteten Behälter gebrauchsfertig lagert. Sie können aber auch als Zweikomponentensysteme verwendet werden, bei denen die Copolymerisate und die Vernetzungskomponenten getrennt gelagert und erst kurz vor der Anwendung zusammengerührt werden.

Im Falle eines Einkomponentensystems muß besonders sorgfältig auf den Ausschluß von Wasser geachtet werden, um vorzeitiges Aushärten zu vermeiden.

Im Falle eines Zweikomponentensystems ist die Anwesenheit geringer Spuren Wasser in den Ausgangs- und Zusatzstoffen weniger kritisch, was sowohl die Verarbeitung der Ausgangsstoffe als auch die Lagerung des Zweikomponentensystems erleichtert.

Die erfingungsgemäßen Mischungen C finden als mit Luftfeuchtigkeit selbsthärtbare Kleb-, Dichtungs- und Beschichtungsmassen Verwendung.

Als solche eignen sie sich zum Verkleben von organischen und anorganischen Materialien untereinander oder miteinander, zum Abdichten sowie zum Beschichten solcher Materialien wie z.B. Metall, Holz, Glas, Keramik, Stein, Beton, Kunststoffen, Textilien, Leder, Pappe und Papier.

Die Massen gemäß der Erfindung härten bei Einwirkung von Luftfeuchtigkeit innerhalb kurzer Zeit aus und weisen im gehärteten Zustand eine erhöhte Elastizität und Dehnfähigkeit, jedoch keine Oberflächenklebrigkeit auf. Sie zeigen darüber hinaus im gehärteten Zustand ein erhöhtes Haftvermögen auf Untergrundmaterialien wie Aluminium, Holz, Glas, Keramik, Beton, Mauerwerk sowie den meisten Kunststoffen.

### Beispiele

Die Verbindungen I, II, III, IV, V, VII und R bilden zusammen jeweils 100 Gew.-% und entsprechen der Zusammensetzung des Polymerisats. Die Gewichtsangabe des Initiators I in Gew.-% bezieht sich jeweils auf das Polymerisat. Die Gewichtsangaben des Lösungsmittels L und des Trocknungsmittels T beziehen sich auf die gesamte Polymerlösung.

### 1b) Herstellung von Copolymerisaten B1 ohne Si-Regler als Verbindungen V

Eine Vorlage V wurde nach dem Erhitzen auf 110°C bei Verwendung von Toluol als Lösungsmittel bzw. 75°C bei Verwendung von Essigsäureethylester als Lösungsmittel im Laufe von 3 Stunden mit dem Zulauf 1 und im Laufe von 3,5 Stunden mit dem Zulauf 2 versetzt, wobei die Zuläufe gleichzeitig, aber getrennt zugegeben wurden.

Danach wurde 1 Stunde bei 120°C nachpolymerisiert, oder es wurden im Falle der Copolymerisate B1/14 und B1/19 noch 5,5 g (1,1 Gew.-%) bzw. 4 g (0,7 Gew.-%) tert.-Butyl-per-2-ethylhexanoat zugesetzt, wonach 3 Stunden bei 80°C bzw. 2 Stunden bei 140°C nachpolymerisiert wurde. Im Falle des Copolymerisates B1/21 wurde anschließend so viel Toluol abdestilliert, daß eine 80 %ige Lösung entstand, im Falle des Copolymerisates B1/12 wurde hingegen das Lösungsmittel zunächst vollständig destillativ entfernt, wonach das Copolymerisat erneut in Toluol aufgenommen wurde, so daß eine 60 %ige Lösung entstand. Im Falle der Copolymerisate B1/14 und B1/15 wurde das Lösungsmittel vollständig abdestilliert.

### Beispiele C/1 bis C/12

### C) Herstellung von härtbaren Mischungen C

### 1) Herstellung von Copolymerisaten C1

Die Copolymerisate C1 wurden analog den Copolymerisaten B1 ohne Si-Regler hergestellt.

Im Falle des Copolymerisates C1/3 wurden weitere 5,5 g (1 Gew.-%) tert.-Butyl-per-2-ethylhexanoat zugesetzt und dann wurde 3 Stunden bei 80°C nachpolymerisiert.

Tabelle 9 zeigt die Zusammensetzung der Vorlage V und der Zuläufe 1 und 2 sowie die in THF gemessenen K-Werte der Copolymerisate und die Feststoffgehalte der erhaltenen Copolymerisatlösungen vor der Destillation.

### 2) Herstellung von Copolymerisaten C2

Die Copolymerisate C2 wurden analog den Copolymerisaten C1 hergestellt, jedoch unter Stickstoffatmosphäre.

In allen Fällen wurden weitere 3 g (0,5 Gew.-%) tert.-Butyl-per-2-ethylhexanoat zugesetzt und dann wurde 1,5 Stunden bei 140°C nachpolymerisiert.

Tabelle 10 zeigt die Zusammensetzungen der Vorlage V und der Zuläufe 1 und 2 sowie die in THF gemessenen K-Werte der Copolymerisate und die Feststoffgehalte der erhaltenen Copolymerisatlösungen vor der Destillation.

### 3) Umsetzungsprodukte aus den Copolymerisaten C2 und den Verbindungen VI

Zu a Gew.-% der Copolymerisate C2 wurden b Gew.-% Urethanisierungskatalysatoren U und c Gew.-% der Verbindungen VI zugesetzt, wonach im Falle der Copolymerisate C2/2, C2/6, C2/7, C2/8 und C2/9 5 Stunden auf 130°C unter Stickstoffatmosphäre erhitzt wurde bzw. im Falle der Copolymerisate C2/1, C2/3, C2/4 und C2/5 die Umsetzung bei Raumtemperatur durchgeführt wurde.

Die Einzelheiten dieser Versuche sowie deren Ergebnisse sind der Tabelle 11 zu entnehmen.

### 4) Herstellung von härtbaren Mischungen C

Zu a Gew.-% der Umsetzungsprodukte 1 bis 9 aus den Copolymerisaten C2 und den Verbindungen VI wurden b Gew.-% der Copolymerisate C1 und in einigen Fällen c Gew.-% Füllstoffe und Verstärkungsmittel F sowie d Gew.-% Urethanisierungskatalysatoren U zugegeben.

Die Einzelheiten dieser Versuche sind Tabelle 12 zu entnehmen.

### Anwendungstechnische Eigenschaften

Als anwendungstechnische Eigenschaften der erfindungsgemäßen härtbaren Mischungen C wurden die Reißdehnung und die Reipfestigkeit ermittelt.

Zum Vergleich wurden die entsprechenden Werte der Vergleichsbeispiele V/6, V/7, V/8,9,10 und V/11,12 bestimmt, wobei das Vergleichsbeispiel V/6 gemäß Beispiel 1 der DE-A-29 15 864 und die Vergleichsbeispiele V/7, V/8,9,10 und V/11,12 gemäß deren allgemeinen Lehre durchgeführt wurden.

Zur Bestimmung der Reißdehnung und Reißfestigkeit wurden aus den härtbaren Mischungen C/1 bis C/12 und den Vergleichsmischungen V 1 mm dicke Folien durch Auftragung auf eine Glasplatte hergestellt. Anschließend wurden aus den Folien Probekörper ausgestanzt, deren Reißdehnung und Reißfestigkeit nach DIN 53 504 bei einer Vorschubgeschwindigkeit von 100 mm/min unter Verwendung des Probekörpers S3A gemessen wurde. Die Ergebnisse der Prüfungen sind Tabelle 12 zu entnehmen.

In allen Fällen zeigten die erfindungsgemäßen Mischungen C hohe Elastizitäten, die aufgrund geringerer Reißfestigkeits- und höherer Reißdehnungs-Werte deutlich über den Elastizitäten der Vergleichsmischungen aus den reinen Umsetzungsprodukten aus den Copolymerisaten C2 und den Verbindungen VI lagen.

### Bedeutung der Abkürzungen in den Tabellen 1 bis 21

### Verbindungen 1

- I/1 =: Methylacrylat
- I/2 =: Ethylacrylat
- I/3 =: n-Butylacrylat
- I/4 =: Ethylhexylacrylat
- I/5 =: Methylmethacrylat

### Verbindungen II

- II/1 =: 5-Isocyanato-3-oxapentylmethacrylat
- II/2 =: Isocyanatoethylacrylat

### Verbindungen III

- III/1: = Maleinsäureanhydrid
- III/2 =: Itaconsäureanhydrid

### Verbindungen IV

- IV/1 =: Acrylnitril
- IV/2 =: Styrol
- IV/3 =: Vinylacetat

### Verbindungen V

- V/1 =: Mercaptopropyltrimethoxysilan
- V/2 =: Mercaptopropyltriethoxysilan

### Verbindungen VI

- VI/1 =: Prepolymer 1 )
- VI/2 =: Prepolymer 2 ) siehe Tabelle 5
- VI/3 =: Prepolymer 3 )
- VI/4 =: Prepolymer 4 )
- VI/5 =: 5-Isocyanat-3-(isocyanatmethyl)-1,1,3-trimethylcyclohexan (Isophorondiisocyanat)
- VI/6 =: Bis-[4-isocyanatphenyl]-methan
- VI/7 =: 2,4-Bis-[isocyanat]-toluol
- VI/8 =: 1,6-Bis-[isocyanat]-hexan
- VI/9 =: Bis-[6-isocyanat-hexylaminocarbonyl]-(6-isocyanat-hexyl)-amin, Isocyanatgehalt 23 Gew.-%
- IV/10 =: 2,4,6-Trioxo-1,3,5-tris-[6-isocyanat-1-hexyl]-hexahydro-1,3,5-triazin, Isocyanatgehalt 22 Gew.-%

### Alkylenoxide Alk --

- Alk/1 =: Ethylenoxid
- Alk/2 =: 1,2-Propylenoxid

### Starter S

- S/1 =: Glycerin
- S/2 =: Dipropylenglykol

### Verbindungen VII

- VII/1 =: Hydroxyethylacrylat
- VII/2 =: Hyroxypropylacrylat
- VII/3 =: Hydroxybutylacrylat
- VII/4 =: Hydroxyhexylacrylat
- VII/5 =: Polyethylenglykolmonomethacrylat

### Verbindungen VIII

- VIII/1 =: Aldimin 1 aus 1,6-Hexamethylendiamin und 2,2-Dimethylpropanal
- VIII/2 =: Aldimin 2 aus 1,6-Hexamethylendiamin und 2-Formylisobuttersäuremethylester
- VIII/3 =: Aldimin 3 aus 3-Aminomethyl-3,5,5-trimethylcyclohexylamin (Isophorondiamin) und Isobutyraldehyd
- VIII/4 =: Aldimin 4 aus Polyoxypropylendiamin und, -triamin und 2,2-Dimethylpropanal
- VIII/5 =: Ketimin 1 aus 1,6-Hexamethylendiamin und Methylisobutylketon
- VIII/6 =: Ketimin 2 aus Bis-(4-amino-cyclohexyl)-methan und Methylisobutylketon

### Amine Am

- Am/1 =: 1,6-Hexamethylendiamin
- Am/2 =: 3-Aminomethyl-3,5,5-trimethylcyclohexylamin (Isophorondiamin)
- Am/3 =: Polyoxypropylendiamin, MG 230
- Am/4 =: Polyoxypropylentriamin, MG 440
- Am/5 =: Bis-(4-amino-cyclohexyl)-methan

### Aldehyde Ald

- Ald/1 =: 2,2-Dimethylpropanal
- Ald/2 =: 2-Formylisobuttersäuremethylester
- Ald/3 =: Isobutyraldehyd

### Ketone Ket

- Ket/1 =: Methylisobutylketon

### Lösungsmittel L --

- L/1 =: Toluol
- L/2 =: Essigsäureethylester
- L/3 =: Cyclohexan

### Initiatoren I

- I/1 =: 2,2'-Azobisisobutyronitril
- I/2 =: tert.-Butylper-2-ethylhexanoat
- 1/3 =: tert.-Butylperoctoat

### Regler R

- R/1 =: Mercaptoethanol
- R/2 =: Thioglykolsäureethylester
- R/3 =: Thioglycerin
- R/4 =: tert.-Dodecylmercaptan
- R/5 =: tert.-Mercaptoessigsäuremethylester

### Trocknungsmittel T

- T/1 =: Triethylorthoformiat
- T/2 =: Tetraethoxysilan

### Urethanisierungskatalysatoren U

- U/1 =: Bis-[dodecanoyloxy]-dibutyl-zinn
- U/2 =: Bis-[ethylhexanoyloxy]-zinn
- U/3 =: 1,4-Diaza-bicyclo[2.2.2]-octan

### Füllstoffe und Verstärkungsmittel F

F/1 = hydrophobiertes Calciumcarbonat
F/2 = hydrophobiertes Siliciumdioxid
F/3 = Titandioxid

**Tabelle 9**

| Copolymerisate C1 | | | | | | |
|---|---|---|---|---|---|---|
| | C1/1 | C1/2 | C1/3 | C1/4 | C1/5 | C1/6 |
| Vorlage V: | | | | | | |
| III/1 | 2 | 5 | 1 | 4 | | |
| III/2 | | | | | | 2 |
| L/1 | 30 | 30 | | 30 | 30 | 30 |
| L/2 | | | 38 | | | |

| Zulauf 1: | | | | | | |
|---|---|---|---|---|---|---|
| I/2 | | | 98 | 92 | 92 | 98 |
| I/3 | 98 | 95 | | | | |
| III/1 | | | 1 | 4 | 8 | |

| Zulauf 2: | | | | | | |
|---|---|---|---|---|---|---|
| L/1 | 10 | 10 | | 10 | 10 | 10 |
| L/2 | | | 12 | | | |
| I/1 | 0,3 | 0,3 | 0,6 | 0,3 | | 0,3 |
| I/2 | | | | | 3,3 | |
| | | | | | | |
| K-Wert | 31,9 | 28,3 | 55,9 | 54,5 | 20,9 | 37,3 |
| Feststoffgehalt | 59 | 60 | 49 | 59,5 | 59 | 59 |

**Tabelle 10**

| Copolymerisate C2 | | | | | | | | | |
|---|---|---|---|---|---|---|---|---|---|
| | C2/1 | C2/2 | C2/3 | C2/4 | C2/5 | C2/6 | C2/7 | C2/8 | C2/9 |
| Voltage V: | | | | | | | | | |
| L/1 | 30 | | | | 30 | 30 | 30 | 30 | 30 |
| L/2 | | 30 | 30 | 30 | | | | | |
| | | | | | | | | | |

| Zulauf 1: | | | | | | | | | |
|---|---|---|---|---|---|---|---|---|---|
| I/2 | | 98 | 84 | | 64 | | | 94 | 98 |
| I/3 | 95 | | | 79 | 33 | 95 | 92 | | |
| I/5 | | | | 16 | | | | | |
| IV/1 | | | 13 | | | | | | |
| VII/1 | | | 2 | 3 | | 3 | 5 | | |
| VII/2 | 3 | | | | | | | | |
| VII/3 | | 1 | | | 2 | | | 4 | 1 |
| R/1 | 2 | 1 | 1 | 2 | 1 | 2 | 3 | 2 | 1 |
| | | | | | | | | | |

| Zulauf 2: | | | | | | | | | |
|---|---|---|---|---|---|---|---|---|---|
| L/1 | 10 | | | | 10 | 10 | 10 | 10 | 10 |
| L/2 | | 10 | 10 | 10 | | | | | |
| I/1 | 0,3 | 0,5 | 0,5 | 0,5 | 0,7 | 0,3 | 0,5 | 0,5 | 0,5 |
| | | | | | | | | | |
| K-Wert | 15,1 | 21,3 | 30,3 | 15,1 | 17,2 | 14,9 | 12,1 | 17,9 | 18,6 |
| Feststoffgehalt | 59 | 59,5 | 59 | 59,5 | 59,5 | 59 | 58,5 | 59,5 | 59 |

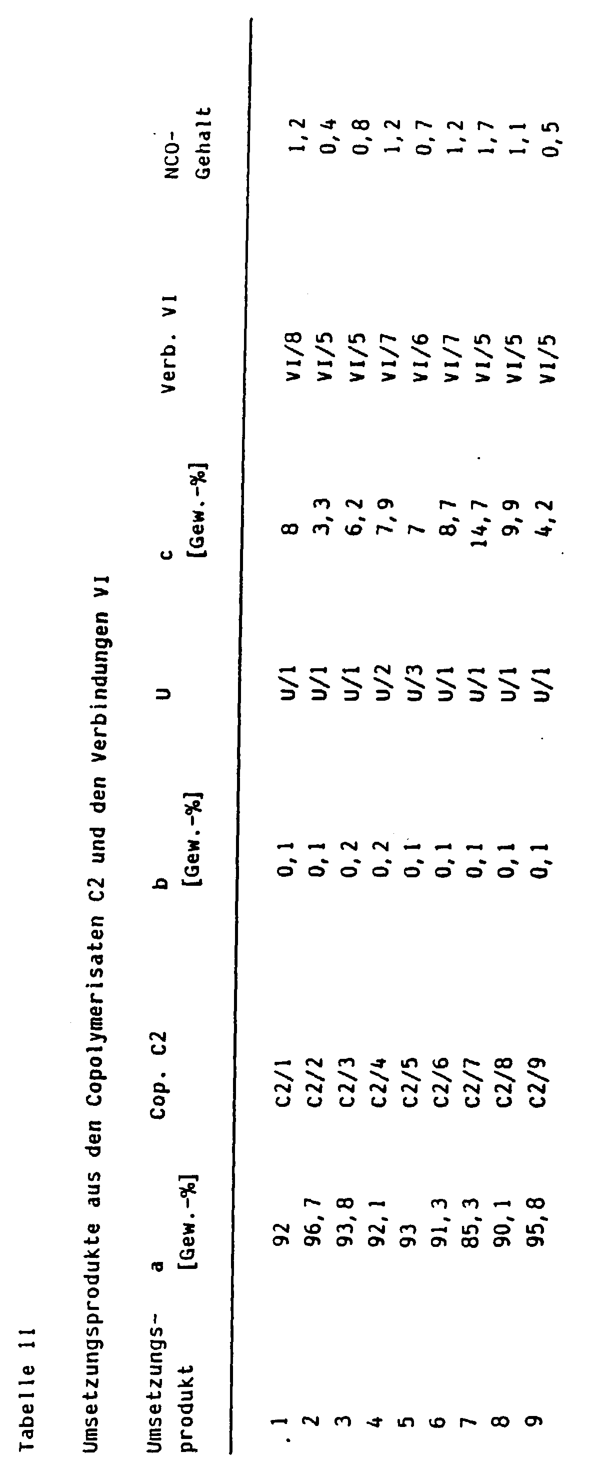

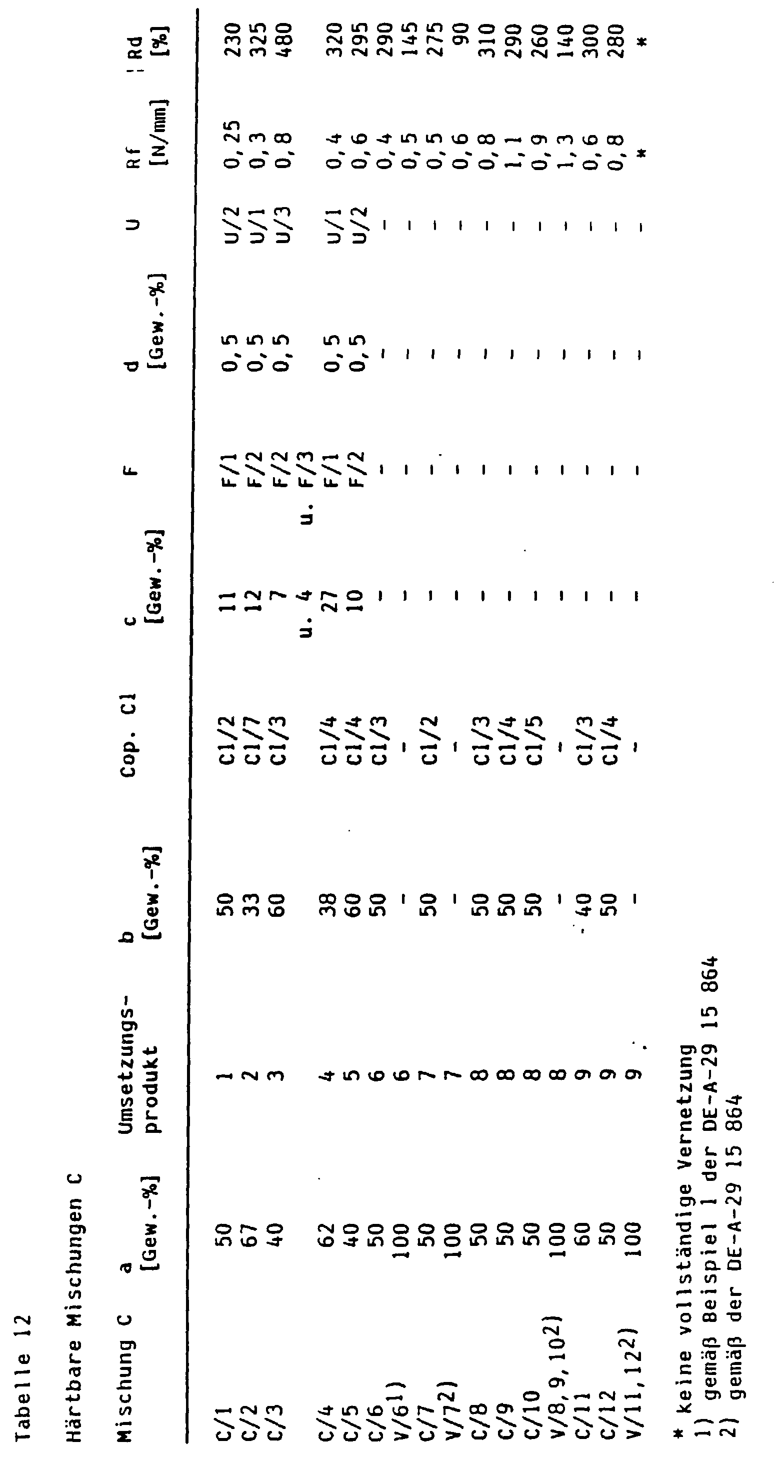

## Patentansprüche

1. Mit Luftfeuchtigkeit selbsthärtbare Mischungen von Copolymerisaten auf der Basis von Acrylsäure-, Methacrylsäure- und/oder Vinylestern mit Vernetzungskomponenten folgenden Aufbaus bzw. folgender Zusammensetzung:
C) härtbare Mischungen aus
1) 9 bis 70 Gew.-% eines Copolymerisates C1 (= 100 Gew.-%) aus
a) 50 bis 99,9 Gew.-% eines oder mehrerer C₁-C₂₄-Alkylester der Acryl- oder Methacrylsäure und/oder C₁-C₂₀-Vinylester (Verbindungen I),
b) 0,1 bis 20 Gew.-% eines radikalisch copolymerisierbaren Carbonsäureanhydrids (Verbindungen III) und
c) 0 bis 30 Gew.-% weiterer Monomerer (Verbindungen IV)
und
2) 29 bis 90 Gew.-% eines Copolymerisats C2 (= 100 Gew.-%) aus
a) 60 bis 99,5 Gew.-% der Verbindungen I,
b) 0,5 bis 10 Gew.-% eines Comonomeren mit einer oder mehreren Hydroxylgruppen (Verbindungen VII) und
c) 0 bis 30 Gew.-% der Verbindungen IV,
und
3) 1 bis 30 Gew.-% eines zwei- oder mehrwertigen Isocyanats (Verbindungen VI), mit der Maßgabe, daß einer Hydroxylgruppe der Verbindungen VII 1,7 bis 2,3 Isocyanatgruppen der Verbindungen VI entsprechen.

2. Mit Luftfeuchtigkeit selbsthärtbare Mischungen aus derartigen Copolymerisaten mit Vernetzungskomponenten nach Anspruch 1, die folgenden Aufbau bzw. folgende Zusammensetzung haben:
C) härtbare Mischungen aus
1) 9 bis 60 Gew.-% eines Copolymerisates C1 (= 100 Gew.-%) aus
a) 62 bis 98 Gew.-% der Verbindungen I,
b) 2 bis 8 Gew.-% der Verbindungen III und
c) 0 bis 30 Gew.-% der Verbindungen IV
und
2) 39 bis 90 Gew.-% eines Copolymerisates C2 (= 100 Gew.-%) aus
a) 64 bis 99 Gew.-% der Verbindungen I,
b) 1 bis 6 Gew.-% der Verbindungen VII und
c) 0 bis 30 Gew.-% der Verbindungen IV
und
3) 1 bis 30 Gew.-% der Verbindungen VI, mit der Maßgabe, daß einer Hydroxylgruppe der Verbindungen VII 1,9 bis 2,1 Isocyanatgruppen der Verbindungen VI entsprechen.

3. Mit Luftfeuchtigkeit selbsthärtbare Mischungen aus derartigen Copolymerisaten mit Vernetzungskomponenten nach Anspruch 1 oder 2, zu deren Herstellung C₁-C₄-Alkylester der Acryl- und/oder Methacrylsäure als Verbindungen I verwendet werden.

4. Mit Luftfeuchtigkeit selbsthärtbare Mischungen aus derartigen Copolymerisaten mit Vernetzungskomponenten nach Anspruch 1 bis 3, zu deren Herstellung Maleinsäureanhydrid als Verbindung III verwendet wird.

5. Mit Luftfeuchtigkeit selbsthärtbare Mischungen aus derartigen Copolymerisaten mit Vernetzungskomponenten nach Anspruch 1 bis 4, zu deren Herstellung Acryl- und/oder Methacrylnitril und/oder Styrol als Verbindungen IV verwendet werden.

6. Mit Luftfeuchtigkeit selbsthärtbare Mischungen aus derartigen Copolymerisaten mit Vernetzungskomponenten nach Anspruch 1 bis 5, zu deren Herstellung Di- und/oder Triisocyanate als Verbindungen VI verwendet werden.

7. Mit Luftfeuchtigkeit selbsthärtbare Mischungen aus derartigen Copolymerisaten mit Vernetzungskomponenten nach Anspruch 1 bis 6, zu deren Herstellung Hydroxy-C₂-C₆-alkylester der Acryl- und/oder Methacrylsäure als Verbindungen VII verwendet werden.

8. Verwendung der härtbaren Mischungen C gemäß Anspruch 1 bis 7 als mit Luftfeuchtigkeit selbsthärtbare Kleb-, Dichtungs- und Beschichtungsmassen.

9. Mit Luftfeuchtigkeit selbsthartbare Kleb-, Dichtungs- und Beschichtungsmassen, enthaltend die härtbaren Mischungen C gemäß Anspruch 1 bis 7.

## Claims

1. A mixture, which is self-curable with atmospheric humidity, of copolymers based on acrylic, methacrylic and/or vinyl esters with crosslinkers of the following composition:
curable mixtures of
1) from 9 to 70% by weight of a copolymer C1 (= 100% by weight) composed of
a) from 50 to 99.9% by weight of one or more C₁-C₂₄-alkyl esters of acrylic or methacrylic acid and/or C₁-C₂₀-vinyl esters (compounds I),
b) from 0.1 to 20% by weight of a carboxylic anhydride which can undergo free radical copolymerization (compounds III) and
c) from 0 to 30% by weight of other monomers (compounds IV),
and
2) from 29 to 90% by weight of a copolymer C2 (= 100% by weight) composed of
a) from 60 to 99.5% by weight of the compounds I,
b) from 0.5 to 10% by weight of a comonomer with one or more hydroxyl groups (compounds VII) and
c) from 0 to 30% by weight of the compounds IV,
and
3) from 1 to 30% by weight of a di- or polyisocyanate (compounds VI), with the proviso that from 1.7 to 2.3 isocyanate groups in compounds VI correspond to one hydroxyl group in compounds VII

2. A mixture, which is self-curable with atmospheric humidity, of copolymers with crosslinkers as claimed in claim 1, which have the following composition:
curable mixtures of
1) from 9 to 60% by weight of a copolymer C1 (= 100% by weight) composed of
a) from 62 to 98% by weight of the compounds I,
b) from 2 to 8% by weight of the compounds III and
c) from 0 to 30% by weight of the compounds IV
and
2) from 39 to 90% by weight of a copolymer C2 (= 100% by weight) composed of
a) from 64 to 99% by weight of the compounds I,
b) from 1 to 6% by weight of the compounds VII and
c) from 0 to 30% by weight of the compounds IV
and
3) from 1 to 30% by weight of the compounds VI, with the proviso that from 1.9 to 2.1 isocyanate groups in the compounds VI correspond to one hydroxyl group in the compounds VII.

3. A mixture, which is self-curable with atmospheric humidity, of copolymers with crosslinkers as claimed in claim 1 or 2, in whose preparation C₁-C₄-alkyl esters of acrylic and/or methacrylic acid are used as compounds I.

4. A mixture, which is self-curable with atmospheric humidity, of copolymers with crosslinkers as claimed in claim 1 to 3, in whose preparation maleic anhydride is used as compound III.

5. A mixture, which is self-curable with atmospheric humidity, of copolymers with crosslinkers as claimed in claim 1 to 4, in whose preparation acrylonitrile and/or methacrylonitrile and/or styrene are used as compounds IV.

6. A mixture, which is self-curable with atmospheric humidity, of copolymers with crosslinkers as claimed in claim 1 to 5, in whose preparation di- and/or triisocyanates are used as compounds VI.

7. A mixture, which is self-curable with atmospheric humidity, of copolymers with crosslinkers as claimed in claim 1 to 6, in whose preparation hydroxy-C₂-C₆-alkyl esters of acrylic and/or methacrylic acid are used as compounds VII.

8. The use of the curable mixtures as claimed in claim 1 to 7 as adhesive, sealing and coating compositions which are self-curable with atmospheric humidity.

9. An adhesive, sealing or coating composition which is self-curable with atmospheric humidity and contains the curable mixtures as claimed in claim 1 to 7.

## Revendications

1. Mélanges, autodurcissants à l'humidité de l'air, de copolymères à base d'esters de l'acide acrylique, de l'acide méthacrylique et/ou d'esters vinyliques avec des composants de réticulation, ayant la structure ou la composition suivante:
C) mélanges durcissables de
1) 9 à 70% en poids d'un copolymère C1 (= 100% en poids) de
a) 50 à 99,9% en poids d'un ou de plusieurs esters alkyliques en C₁-C₂₄ de l'acide acrylique ou méthacrylique et/ou d'esters vinyliques en C₁-C₂₀ (composés I),
b) 0,1 à 20% en poids d'un anhydride d'acide carboxylique susceptible de polymérisation radicalaire (composé III) et
c) 0 à 30% en poids d'autres monomères (composés IV),
2) 29 à 90% en poids d'un copolymère C2 (= 100% en poids) de
a) 60 à 99,5% en poids des composés I,
b) 0,5 à 10% en poids d'un comonomère contenant un ou plusieurs groupements hydroxyle (composés VII) et
c) 0 à 30% en poids des composés IV)
et
3) 1 à 30% en poids d'un isocyanate bivalent ou polyvalent (composé VI), étant spécifié qu'à 1 groupement hydroxyle des composés VII correspondent 1,7 à 2,3 groupements isocyanate des composés VI.

2. Mélanges, autodurcissants à l'humidité de l'air, de copolymères avec des composants de réticulation selon la revendication 1, ayant la structure ou la composition suivante:
C) mélanges durcissables de
1) 9 à 60% en poids d'un copolymère C1 (= 100% en poids) de
a) 62 à 98% en poids des composés I,
b) 2 à 8% en poids des composés III et
c) 0 à 30% en poids des composés IV,
2) 39 à 90% en poids d'un copolymère C2 (= 100% en poids) de
a) 64 à 99% en poids des composés I,
b) 1 à 6% en poids des composés VII et
c) 0 à 30% en poids des composés IV
et
3) 1 à 30% en poids des composés VI, étant spécifié qu'à 1 groupement hydroxyle des composés VII correspondent 1,9 à 2,1 groupements isocyanate des composés VI.

3. Mélanges, autodurcissants à l'humidité de l'air, de copolymères avec des composants de réticulation selon la revendication 1 ou 2, pour la préparation desquels on utilise, comme composés I, des esters alkyliques en C₁-C₄ de l'acide acrylique et/ou méthacrylique.

4. Mélanges, autodurcissants à l'humidité de l'air, de copolymères avec des composants de réticulation selon l'une quelconque des revendications 1 à 3, pour la préparation desquels on utilise, comme composé III, de l'anhydride maléique.

5. Mélanges, autodurcissants à l'humidité de l'air, de copolymères avec des composants de réticulation selon l'une quelconque des revendications 1 à 4, pour la préparation desquels on utilise, comme composés IV, de l'acrylonitrile et/ou du méthacrylonitrile et/ou du styrène.

6. Mélanges, autodurcissants à l'humidité de l'air, de copolymères avec des composants de réticulation selon l'une quelconque des revendications 1 à 5, pour la préparation desquels on utilise, comme composés VI, des di- et/ou triisocyanates.

7. Mélanges, autodurcissants à l'humidité de l'air, de copolymères avec des composants de réticulation selon l'une quelconque des revendications 1 à 6, pour la préparation desquels on utilise, comme composés VII, des esters hydroxyalkyliques en C₂-C₆ de l'acide acrylique et/ou méthacrylique.

8. Utilisation des mélanges durcissables C selon l'une quelconque des revendications 1 à 7 comme masses de collage, d'étanchéification et d'enduction autodurcissantes à l'humidité de l'air.

9. Masses de collage, d'étanchéification et d'enduction autodurcissantes à l'humidité de l'air, contenant les mélanges durcissables C selon l'une quelconque des revendications 1 à 7.
